# EUROPÄISCHE PATENTSCHRIFT

(11) **EP 0 324 388 B1**
(45) Veröffentlichungstag und Bekanntmachung des Hinweises auf die Patenterteilung: **28.12.1994**
(21) Anmeldenummer: 89100206.5
(22) Anmeldetag: 07.01.1989
(51) Int. Cl.: G05D 13/62, H02P 6/02

(54) **Verfahren und Schaltungsanordnung zur Steuerung der Drehzahl eines Rotors**
Speed control method and circuit of a rotor
Méthode et circuit pour commander la vitesse d'un rotor

(30) Priorität: 15.01.1988 DE 3801029
(43) Veröffentlichungstag der Anmeldung: 19.07.1989
(73) Patentinhaber: Deutsche Thomson-Brandt GmbH, 78010 Villingen-Schwenningen (DE)
(72) Erfinder: Gleim, Günter, Dipl.-Ing., D-7730 Villingen 22 (DE); Link, Hermann, Dipl.-Ing., D-7730 VS-Obereschach (DE)

(56) Entgegenhaltungen:
- EP-A- 0 124 642
- EP-A- 0 161 474
- EP-A- 0 292 926
- GB-A- 2 006 481
- US-A- 3 648 141

## Beschreibung

Die Erfindung betrifft ein Verfahren zur Steuerung der Drehzahl eines Rotors nach dem Oberbegriff des Anspruchs 1.

Bei elektronisch geregelten Antrieben ist bekannt, zwischen der angetriebenen Welle (Rotor) und einem Festpunkt Impulse zu erzeugen, deren zeitliche Folge eine Aussage über die jeweilige Umdrehungsgeschwindigkeit der Welle bzw. des Rotors abgeben. Die so erzeugte Impulsfolgefrequenz wird in elektronische Auswerteschaltungen eingegeben, von denen im Vergleich z.B. mit einer Sollfrequenz eine Spannung zur Nachsteuerung der Motordrehzahl abgeleitet wird.

Die Impulserzeugung geschieht mittels sogenannter Tachogeneratoren, wobei die Art der Erzeugung recht unterschiedlich sein kann. So werden z.B. mechanische, elektromagnetische oder optoelektronische Tachogeneratoren eingesetzt. Allen Generatoren mit mehr als einer Impulsauswertung pro Umdrehung ist gemeinsam, daß, bedingt durch die mechanische Anordnung der einzelnen Generatorelemente, während einer Rotorumdrehung Toleranzen vorhanden sind, wodurch die abgegebene Impulsfolgefrequenz während einer Umdrehung trotz gleichmäßiger Umdrehungsgeschwindigkeit nicht konstant ist.
Wenn von einem derartigen toleranzbehafteten Generator z.B. eine PLL mit geringen internen Zeitkonstanten angesteuert wird, gibt das Ausgangssignal der PLL während einer Umdrehung diese Toleranzen wieder, obwohl bei konstanter Umdrehungsgeschwindigkeit auch das Ausgangssignal konstant sein müßte. Dadurch können unerwünschte Regelvorgänge während einer Umdrehung des Rotors ausgelöst werden.

Zur Verbesserung derartiger Motorantriebe ist es aus der US-A-3,648,141 bekannt, in einer Servoregelschleife der Regelspannung eine Steuerspannung zu überlagern, indem beide Spannungen dem Servoregelverstärker zugeführt werden. Durch die Steuerspannung, die ein Korrektursignal bildet und von einer der Impulsanzahl pro Rotorumdrehung entsprechenden Anzahl von individuellen Spannungswerten gebildet wird, welche in einem Speicher abgespeichert sind und mittels der Impulse aus diesen ausgelesen werden, können sich Regelspannungsänderungen, die auf einer entsprechenden Toleranzbehaftung der entsprechenden Impulsgeber beruhen, nur in verminderter Weise bei der Regelung des Motors auswirken.

Bei einem aus der EP-A1-0161474 bekannten Verfahren wird die Gleichlaufregelung eines Elektromotors dadurch verbessert, daß die auf einer Toleranzbehaftung der entsprechenden Impulsgeber zur Drehgeschwindigkeitserfassung beruhenden Phasenfehler durch eine Steuerung des Sollwertgebers der Servoregelschaltung mittels eines abgespeicherten Korrektursignals vermindert werden. Auch hier repräsentiert das Korrektursignal bzw. repräsentieren die das Korrektursignal bildenden abgespeicherten Korrekturwerte bestimmte Phasendifferenzen bzw. Winkelwerte.

Es ist Aufgabe der Erfindung, auch bei derartigen toleranzbehafteten Tachogeneratoren unerwünschte Regelvorgänge zu vermeiden.

Diese Aufgabe wird gemäß der Erfindung durch die im Anspruch 1 aufgeführten Merkmale gelöst. Weiterbildungen der Erfindung ergeben sich aus den Ansprüchen 2 bis 4.

In der nur nach Artikel 54(3) EPü zum Stand der Technik gehörenden EP-A2-0292926 ist ein Verfahren zur Vermeidung unerwünschter auf toleranzbehafteten Tachogeneratoren beruhender Regelvorgänge beschrieben, bei dem jeweils die Istzeitdifferenz der Impulse eines Impulsgebers nach Vollendung einer oder mehrerer ermittelt wird, so daß mit der jeweiligen Istzeitdifferenz der Impulse aller auszuwertenden Impulse eine Istzeitdifferenzfolge gebildet wird, die als Regelgröße für einen Vergleich mit einer Sollzeitdifferenzfolge verwendet wird.

Durch das erfindungsgemäße Verfahren wird vor Beginn des Betriebs des Rotors einmal die möglicherweise toleranzbehaftete Anordnung von Punkten oder Markierungen des Rotors erfaßt und gespeichert, indem bei vorgegebener Drehzahl während einer Umdrehung die toleranzbedingten Abweichungen der Impulse von einem gleichmäßigen Zeitraster bestimmt und abgespeichert werden. Aus diesen Werten werden dann durch eine Verhältnisbildung zwischen dem durch das gleichmäßige Zeitraster gebildete Sollintervall und den durch die Toleranzbehaftung der Rotormarkierungen oder -punkten bedingten Istintervallen Korrekturwerte gewonnen, die zur Bereinigung der im folgenden Betrieb ermittelten Istwerte der Impulse verwendet werden. Wenn also nachfolgend die Regelung für den Motor zum Betrieb des Rotors eingeschaltet wird, sind keine unregelmäßig auftretenden Impulse mehr zu erwarten, die die Regelung während einer Umdrehung ungünstig beeinflussen. Vielmehr wird ein gleichmäßiges Impulsmuster erzeugt, so daß die Regelgeschwindigkeit verbessert werden kann und so auch innerhalb einer Rotorumdrehung auftretende Störungen ausgeglichen werden können.

Die Erfindung betrifft ferner eine Schaltungsanordnung zur Steuerung der Drehzahl eines Rotors nach dem Oberbegriff des Anspruchs 5.

Diesbezüglich liegt ihr die Aufgabe zu Grunde, eine Schaltung zu schaffen, die bei toleranzbehafteten Tachogeneratoren unerwünschten Regelvorgänge vermeidet.

Diese Aufgabe wird durch die im kennzeichnenden Teil des Anspruchs 5 angegebenen Merkmale gelöst.

Die Erfindung wird in einem Beispiel anhand der Zeichnung näher erläutert.

Fig. 1 zeigt einen elektronisch kommutierten Motor in Kombination mit einer Kopftrommelanordnung für ein Magnetbandgerät.

Figur 2 zeigt ein Blockschaltbild für die Motorsteuerung eines elektronisch kommutierten Gleichstrommotors.

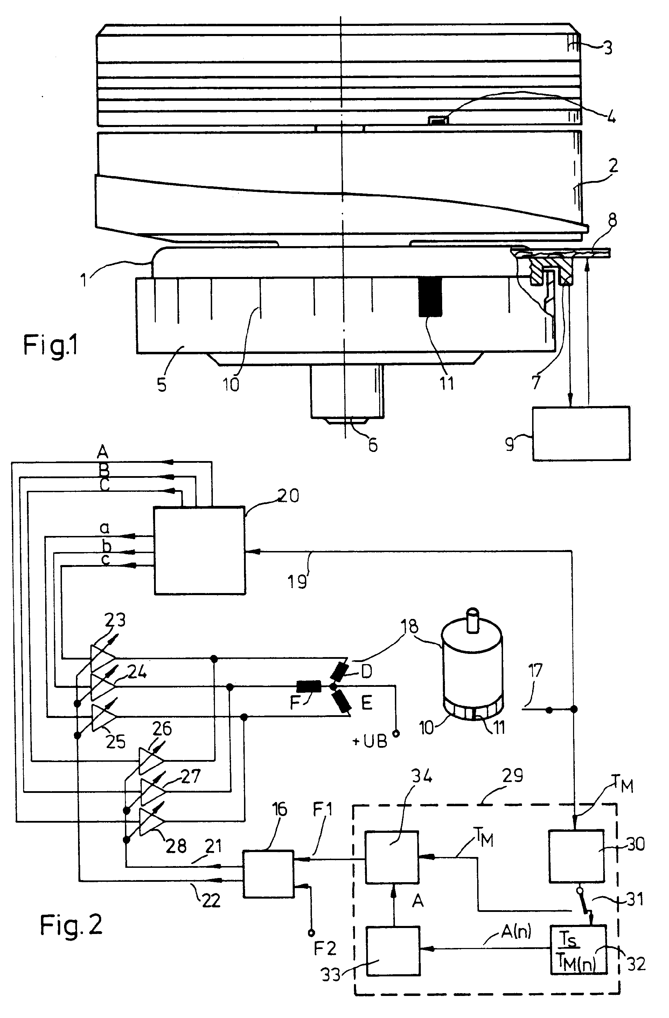

Fig. 1 zeigt einen elektronisch kommutierten Motor in Kombination mit einer Kopftrommelanordnung für ein Magnetbandgerät. Der Motor besteht aus einem Stator 1, in welchem kommutierbare Spulen kreisförmig angeordnet sind. Im Rotor 5 sind Magnete auf einer Kreisbahn angeordnet, die den Spulen im Stator mit einem Luftspalt als Abstand gegenüberstehen. Der Rotor 5 ist mit der oberen rotierenden Kopftrommel 3 auf einer gemeinsamen Welle 6 befestigt, während die untere stationäre Kopftrommel 2 mit dem Stator 1 fest verbunden ist. Der Rotor trägt auf seinem äußeren Umfang Strichmarkierungen 10,11, unterschiedlicher Breite. Der Rand des äußeren Rotorteiles, welches aus lichtdurchläßigem Kunststoff besteht, taucht in den Spalt einer Gabellichtschranke 7 ein, in der bei rotierendem Motor durch die Strichmarkierungen Impulse erzeugt werden, aus deren Folge eine Steuerung des Motors durch die Motorsteuerschaltung 9 abgeleitet wird. Die Gabellichtschranke 7 ist auf einer Leiterplatte 8 befestigt, welche aus dem Statorteil 1 des Motors herausragt, wobei die Gabellichtschranke in einer festen Zuordnung zu den im Stator 1 befindlichen kommutierbaren Spulen angeordnet ist.

Die Strichmarkierungen sind mit konstantem Winkelabstand in einer bestimmten Zuordnung zu den im Rotor befindlichen Magneten angeordnet. Sie können z.B. auf ein Polübergangsminimum der Rotormagnete ausgerichtet sein. Um den Anfang einer Umdrehung mit Hilfe der Strichmarkierungen 10,11, zu kennzeichnen, ist die Strichtmarkierung 11 unterschiedlich zu den anderen gleichartigen Strichmarkierungen 10 ausgeführt.

Bei der dargestellten Anordnung ist diese Markierung 11 außerdem zu den in der oberen Kopftrommel 3 befindlichen Magnetköpfen 4 in einer festgelegten Zuordnung ausgerichtet.

Fig. 2 zeigt ein Blockschaltbild für die Motorsteuerung eines elektronisch kommutierten Gleichstrommotors. Motor 18 ist dreisträngig mit den Strängen D,E und F aufgebaut. Die einzelnen Stränge sind in Sternschaltung angeordnet. Der Sternmittelpunkt ist mit der Betriebsspannung +UB verbunden. Mit Motor 18 ist ein Sensor 17 gekoppelt, der als Optokoppler arbeitet und einen Strichcode 10, 11 auswertet, der am Rotorumfang angebracht ist. Sensor 17 gibt Signale über Leitung 19 an einen Umsetzer 20 ab, welche innerhalb des Umsetzers z.B. mit Hilfe eines Microprozessors ausgewertet werden. Es wird die jeweilige Winkellage des Rotors erkannt und eine Schaltspannung auf den Ausgangsleitungen a,b,c und A,B,C ausgegeben, durch welche über steuerbare Verstärker 23 - 28 der jeweilige Spulenstrang von Motor 18 angeschaltet wird. Die Informationen für die Phasenlage der Kommutierung steht während der gesamten Betriebszeit auf den Leitungen a,b,c und A,B,C an. Dabei sind z.B. die Ausgangsleitungen a,b,c für eine Kommutierung in Bremsrichtung und die Leitungen A,B und C für eine Kommutierung in Beschleunigungsrichtung vorgesehen.

Die tatsächliche Kommutierungsrichtung und die Intensität der Kommutierung wird durch steuerbare Verstärker 23 - 28 vorgegeben, die als Stellglieder zwischen den Ausgangsleitungen von Umsetzer 20 und den Spulenanschlüssen von Motor 18 geschaltet sind. So sind die Ausgangsleitungen für Bremsrichtung a,b,c mit den Eingängen der Verstärker 23,24 und 25 und die Ausgangsleitungen für Beschleunigungsrichtung A,B und C mit den Eingängen der Verstärker 26,27 und 28 verbunden.

Die Verstärker 23,24 und 25 bilden eine Gruppe, deren parallelgeschaltete Steuereingänge mit einer PLL-Schaltung 16 über Leitung 22 verbunden sind, während die Gruppe der Verstärker 26,27 und 28 mit ihren ebenfalls parallelgeschalteten Steuereingängen über Leitung 21 an die PLL-Schaltung 16 angeschaltet sind. Die Ausgänge der Verstärker 23 und 26 speisen Strang D, die der Verstärker 24 und 27 Strang F und die der Verstärker 25 und 28 Strang E von Motor 18.

Über die Steuerleitungen 21 bzw. 22 werden die Verstärkergruppen 23 - 25, bzw. 26 - 28 aktiviert, d.h. daß an den Verstärkereingängen anstehende Kommutierungssignal von Umsetzer 20 wird in Abhängigkeit der Steuersignale auf den Leitungen 21 bzw. 22 an die Spulenstränge von Motor 18 "durchgeschaltet". Dabei ist die Größe des Kommutierungsstromes abhängig vom Innenwiderstand des "durchgeschalteten" Verstärkers, also abhängig von der Größe der auf den Steuerleitungen 21 bzw. 22 anstehenden Spannung. Diese Spannung bzw. Spannungen werden in der PLL-Schaltung 16 generiert. Ihre Größe und auch die Auswahl der jeweils mit Spannung beaufschlagten Leitung 21 oder 22 ergibt sich aus dem Vergleich einer von der Motordrehzahl abgeleiteten Istzeitdifferenzfolge F1 mit einer Sollzeitdifferenzfolge F2.

Durch Auswertung eines Strichcodes am Rotorumfang mittels Sensor 17 wird eine Tachofrequenz erzeugt, aus der bei jeder zweiten oder weiteren Umdrehung die Folge von Istzeitdifferenzen F1 abgeleitet wird. Bei Nenndrehzahl entspricht F1 der Sollzeitdifferenzfolge F2.
Solange F1 größer als F2 ist, wird von der PLL-Schaltung 16 auf der Leitung 21 eine Spannung zur Steuerung der Regelverstärkergruppe 26 - 28 ausgegeben, die für die Kommutierung in Beschleunigungsrichtung zuständig ist. Wird dagegen z.B. durch Lastminderung eine Drehzahl erreicht, bei der der Sensor 17 eine höhere Frequenz abgibt, wird ein Signal an Leitung 21 angelegt und der Motor 18 gebremst. Die Größe der jeweiligen Verstärkungssteuerung wird also aus dem anstehenden Istwert im Vergleich zu einem Sollwert in der Schaltung 16 abgeleitet.

Ehe die Regelung des Motors 18 eingeschaltet wird, wird der Rotor zunächst auf Nenndrehzahl beschleunigt. Bei abgeschalteter Regelung wird dann die Ansteuerung des Motors konstant belassen und es werden die Zeitintervalle T_{M} zwischen aufeinanderfolgenden Impulsen, sowie die Gesamtzeit T_{C} einer Umdrehung erfaßt. Dieser Vorgang kann auch bei mehreren Umdrehungen durchgeführt werden, um die Richtigkeit der ersten Erfassung zu überprüfen. Anschließend wird die ermittelte Gesamtzeit T_{C} durch die Anzahl n der Impulse dividiert. Daraus ergibt sich ein Zeitraster T_{S}, das einem gleichmäßigen Abstand der Impulse entspricht. Auf Grund mechanischer Toleranzen werden die Zeitintervalle T_{M} zwischen den gemessenen Impulsen von den durch das Zeitraster T_{S} gebildeten Impulsen abweichen. Diese Abweichungen werden als Korrekturwerte für jedes Zeitintervall zwischen den Impulsen berechnet, und zwar in der Form A(n) = T_{S}/T_{M}(n).

Nachdem diese Korrekturwerte erfaßt und gespeichert sind, kann nun auf die normale Regelungsbetriebsart übergegangen werden. Hierbei werden die einmal gespeicherten Korrekturwerte immer wieder zur Korrektur der Istwerte der Istwertdifferenzfolge F1 verwendet. Zu diesem Zweck wird der Korrekturwert A(n) mit dem gemessenen Impulsintervall T_{M} multipliziert. Die bereinigte Istzeitdifferenzwertfolge F1 ergibt sich somit als F1=T(n)=T_{M}(n)*A(n).

Zur Durchführung der Berechnungen und Speicherungen können Schaltungen verwendet werden, wie sie als Unterblöcke in einer Auswertungsschaltung 29 angedeutet sind. Es handelt sich hierbei um eine Meßschaltung 30 zur Ermittlung der Zeitintervalle T_{M} zwischen aufeinanderfolgenden Impulsen, sowie der Gesamtzeit T_{C} einer Rotorumdrehung, eine Divisionsschaltung 31, der die Ausgangssignale der Meßschaltung 30 über einen Schalter 32 zur Bestimmung eines Korrekturwertes zugeführt sind, einer Speicherschaltung 33 zur Speicherung der Korrekturwerte und einer Multiplikationsschaltung 34 zur Multiplikation der Zeitintervalle T_{M}(n) zwischen aufeinander folgenden Impulsen einerseits und Korrekturwerten A(n) andererseits. Die Ausgangssignale der Multiplikationsschaltung 34 gelangen dann an eine Steuerschaltung in Form der PLL-Schaltung 16.

Alternativ können statt der bevorzugt durchgeführten Division und Multiplikation auch eine Differenzwertbildung und eine anschließende Addition oder Subtraktion durchgeführt werden.

Die im angedeuteten Unterblöcke 30 bis 34 lassen sich auch durch einen Mikroprozessor realisieren, bei dem die Eigenschaften der dort angedeuteten Schaltungen nacheinander durch entsprechende Programmroutinen verwirklicht werden.

## Patentansprüche

1. Verfahren zur Steuerung der Drehzahl eines Rotors durch Auswertung von Impulsen, die zwischen Festpunkten und Punkten des Rotors während einer Umdrehung durch n-Impulsgeber erzeugt werden, wobei die Gesamtzeit (T_{C}) einer Umdrehung ermittelt wird und wobei aus der Anzahl (n) der während einer Umdrehung auftretenden Impulse (T_{M}) ein gleichmäßiges Zeitraster (T_{S}) bestimmt wird, und mit toleranzbedingte Abweichnungen der Impulse von diesem gleichmäßigen Zeitraster (T_{S}) kompensierenden Korrekturwerten (A), **dadurch gekennzeichnet**, daß die Korrekturwerte (A) bei einer vorgegebenen Drehzahl während einer Umdrehung aus den Abweichungen der Impulse von dem gleichmäßigen Zeitraster (T_{S}) bestimmt werden, wobei der Bestimmung der Abweichungen die Erfassung der Zeitpunkte der Impulse oder der Intervalle (T_{M}) zwischen aufeinanderfolgenden Impulsen während einer Umdrehung zugrunde liegt, und als Quotient aus der Verhältnisbildung zwischen dem durch das gleichmäßige Zeitraster gebildeten Sollintervall oder Zeitraster (T_{S}) und dem Istintervall (T_{M}) abgespeichert werden, und daß bei den folgenden Umdrehungen des Rotors aus den um die abgespeicherten Korrekturwerte (A) bereinigten Istwerten (T_{M}) der Impulse ein Signal (F1) zur Steuerung des antreibenden Motors abgeleitet wird.

2. Verfahren nach Anspruch 1, **dadurch gekennzeichnet**, daß die vorgegebene Drehzahl dadurch definiert wird, daß der Rotor durch den antreibenden Motor zunächst auf Nenndrehzahl beschleunigt wird und anschließend während der Ermittlung der Zeitpunkte der Impulse oder der Zeitintervalle (T_{M}) zwischen aufeinanderfolgenden Impulsen sowie der Gesamtzeit (T_{C}) einer Umdrehung konstant angesteuert wird.

3. Verfahren nach Anspruch 1 oder 2, **dadurch gekennzeichnet**, daß das Zeitraster (T_{S}) durch Division der Gesamtzeit (T_{C}) durch die Anzahl (n) der Impulse während einer Umdrehung bestimmt wird.

4. Verfahren nach einem oder mehreren der Ansprüche 1 bis 3, **dadurch gekennzeichnet**, daß die um die Korrekturwerte bereinigten Istwerte durch Multiplikation der Istwerte mit den Korrekturwerten (A) erzeugt werden.

5. Schaltungsanordnung zur Steuerung der Drehzahl eines Rotors durch Auswertung von Impulsen, die zwischen Festpunkten und Punkten (10,11) des Rotors (18) während einer Umdrehung durch n-Impulsgeber erzeugt werden, mit einer Meßschaltung (30) zur Ermittlung von Zeitpunkten der Impulse oder der Zeitintervalle (T_{M}) zwischen aufeinanderfolgenden Impulsen sowie die Gesamtzeit (T_{C}) einer Rotorumdrehung, **dadurch gekennzeichnet**, daß einer Divisionsschaltung (32) die Ausgangssignale der Meßschaltung (30) zur Bestimmung eines Korrekturwertes (A) zugeführt sind und der Divisionsschaltung (32) eine Speicherschaltung (33) zur Speicherung der Korrekturwerte (A) nachgeschaltet ist und daß eine Multiplikationsschaltung (34) vorgesehen ist, der Zeitpunkte der Impulse oder Zeitintervalle (T_{M}) zwischen aufeinanderfolgenden Impulsen einerseits und Korrekturwerte (A) andererseits zugeführt sind und deren Ausgangssignal (F1) an eine Steuerschaltung zur Steuerung des den Rotor (18) antreibenden Motors gelangt.

## Claims

1. Method of controlling the rotational speed of a rotor by evaluating pulses which are generated between fixed points and points on the rotor by n pulse generators during a revolution, wherein the total time (T_{C}) of a revolution is determined and wherein a uniform time raster (T_{S}) is determined from the number (n) of pulses occurring during a revolution and by using correcting values (A) which compensate for deviations of the pulses from this uniform time raster (T_{S}) that are caused by tolerances, characterised in that, at a predetermined rotational speed, the correcting values (A) are determined during one revolution from the deviations of the pulses from the uniform time raster (T_{S}), wherein the determination of the deviations is based on the determination of the time points of the pulses or of the intervals (T_{M}) between successive pulses during a revolution and they are stored as the quotient resulting from the formation of the ratio between the reference interval formed by the uniform time raster or the time raster (T_{S}) and the actual interval (T_{M}) and that a signal (F1) for controlling the driving motor is derived from the actual values (T_{M}) of the pulses which have been corrected by the stored correcting values (A) during the subsequent revolutions of the rotor.

2. Method in accordance with Claim 1, characterised in that, the predetermined rotational speed is defined in that the rotor is initially accelerated up to the rated speed by the driving motor and is thereafter controlled to be constant during the determination of the time points of the pulses or of the time intervals (T_{M}) between successive pulses as well as of the total time (T_{C}) of a revolution.

3. Method in accordance with Claim 1 or 2, characterised in that, the time raster (T_{S}) is determined by division of the total time (T_{C}) by the number (n) of pulses during a revolution.

4. Method in accordance with one or more of the Claims 1 to 3, characterised in that, the actual values corrected by the correcting values are produced by multiplication of the actual values by the correcting values (A).

5. Circuit arrangement for controlling the rotational speed of a rotor by evaluating pulses which are generated between fixed points and points (10, 11) on the rotor (18) by n pulse generators during a revolution, including a measuring circuit (30) for determining the time points of the pulses or the time intervals (T_{M}) between successive pulses as well as the total time (T_{C}) for one revolution of the rotor, characterised in that, the output signals of the measuring circuit (30) are supplied to a dividing circuit (32) for determining a correcting value (A) and a storage circuit (33) is connected subsequently of the dividing circuit (32) for storing the correcting values (A) and that there is provided a multiplication circuit (34) to which the time points of the pulses or the time intervals (T_{M}) between successive pulses are supplied on the one hand and the correcting values (A) are supplied on the other hand and the output signal (F1) of which reaches a control circuit for controlling the motor which is driving the rotor (18).

## Revendications

1. Procédé de commande du régime d'un rotor par analyse d'impulsions produites entre des points fixes et des points du rotor par un générateur de n-impulsions pendant une rotation du rotor, la durée totale (T_{C}) d'une rotation étant calculé et un système de tranche de temps (T_{S}) uniforme étant défini sur la base du nombre (n) d'impulsions se produisant pendant une rotation, avec des valeurs de correction (A) compensant les écarts, dûs aux tolérances, des impulsions par rapport à ce système de tranche de temps (T_{S}) uniforme, **caractérisé en ce que** les valeurs de correction (A) sont déterminées par le système de tranche de temps (T_{S}) uniforme sur la base des écarts des impulsions, pour un régime donné et pendant une rotation, cette détermination des écarts reposant sur la détection du moment des impulsions ou des intervalles (T_{M}) entre des impulsions se succédant pendant une rotation, et qu'elles sont mémorisées comme quotient du rapport entre l'intervalle de temps de consigne ou système de tranche de temps (T_{S}) formé par le système de tranche de temps uniforme, et l'intervalle de consigne (T_{M}), et, **en ce que**, pour les rotations suivantes du rotor, on déduit des valeurs réelles (T_{M}) corrigées des valeurs de correction stockées en mémoire, un signal (F1) pour la commande du moteur d'actionnement.

2. Procédé selon la revendication 1, **caractérisé en** **ce que** la vitesse de rotation donnée est définie d'une manière selon laquelle le rotor est d'abord accéléré jusqu'au régime nominal par le moteur d'actionnemepour être ensuite commandé de manière constante, pendant le calcul des moments des impulsions ou des intervalles de temps (T_{M}) entre des impulsions se succédant, ainsi que de la durée totale (T_{C}) d'une rotation.

3. Procédé selon la revendication 1 ou 2, **caractérisé** **en ce que** le système de tranche de temps (T_{S}) est déterminé par division de la durée totale (T_{C}) par le nombre (n) d'impulsions pendant une rotation.

4. Procédé selon une ou plusieurs des revendications 1 à 3, **caractérisé en ce que** les valeurs réelles corrigées des valeurs de correction sont obtenues par multiplication des valeurs réelles par les valeurs de correction.

5. Arrangement de circuits pour la commande du régime d'un rotor par analyse d'impulsions, produites par un générateur de n-impulsions, entre des points fixes et des points (10,11) du rotor (18) pendant une rotation, avec des connexions de mesure (30) pour le calcul des moments des impulsions ou des intervalles de temps (T_{M}) entre des impulsions se succédant, ainsi que de la durée totale (T_{C}) d'une rotation du rotor, **caractérisé en ce qu**'un circuit de division (32) reçoit les signaux de sortie des connexions de mesure (30), afin de calculer une valeur de correction (A), qu'un circuit de mémorisation (33) pour le stockage des valeurs de correction est monté en aval du circuit de division (32) et qu'un circuit de multiplication (34) est prévu, ce circuit recevant, d'un côté, les moments des impulsions ou les intervalles de temps (T_{M}) entre des impulsions se succédant et de l'autre côté, des valeurs de correction (A) , le signal de sortie (F1) de ce circuit arrivant à un circuit de commande pour la commande du moteur actionnant le rotor (18).
